# FASCICULE DE BREVET EUROPEEN

(11) **EP 3 274 766 B1**
(45) Date de publication et mention de la délivrance du brevet: **10.04.2019**
(21) Numéro de dépôt: 16716492.0
(22) Date de dépôt: 23.03.2016
(51) Int. Cl.: G02F 1/35, G02F 1/37, H01S 3/00

(54) **SOURCE LASER ACCORDABLE EN FRÉQUENCE ET PROCÉDÉ D'ÉMISSION D'UN FAISCEAU LASER ACCORDABLE**
FREQUENZABSTIMMBARE LASERQUELLE UND VERFAHREN ZUM AUSSENDEN EINES ABSTIMMBAREN LASERSTRAHLS
FREQUENCY-TUNABLE LASER SOURCE AND METHOD FOR EMITTING A TUNABLE LASER BEAM

(30) Priorité: 27.03.2015 FR 1552593
(43) Date de publication de la demande: 31.01.2018
(73) Titulaire: Centre National de la Recherche Scientifique CNRS, 75794 Paris Cedex 16 (FR); Observatoire de Paris, 75014 Paris (FR)
(72) Inventeur: ACEF, Mohand Ouali, 75013 Paris (FR)
(74) Mandataire: Priori, Enrico
(86) Numéro de dépôt international: PCT/EP2016/056434
(87) Numéro de publication internationale: WO 2016/156160

(56) Documents cités:
- WO-A1-98/07219
- WO-A1-2014/170331
- US-A1- 2005 063 040
- US-B1- 6 665 320
- SCHNEIDER THOMAS: "Fiber-laser frequency combs for the generation of tunable single-frequency laser lines, mm- and THz-waves and sinc-shaped Nyquist pulses", PROCEEDINGS OF SPIE, S P I E - INTERNATIONAL SOCIETY FOR OPTICAL ENGINEERING, US, vol. 9378, 4 mars 2015 (2015-03-04), pages 937822-937822, XP060050466, ISSN: 0277-786X, DOI: 10.1117/12.2086828 ISBN: 978-1-62841-839-2

## Description

### ETAT DE L'ART

### Domaine technique

La présente description concerne une source laser accordable en fréquence, en particulier dans le visible et dans l'ultraviolet, ainsi qu'un procédé d'émission d'un faisceau laser accordable en fréquence.

### Etat de l'art

Les sources laser émettant dans le domaine spectral visible, typiquement entre 400 et 800 nm, présentent de nombreuses applications dans des domaines tels que le biomédical, la spectroscopie, la télédétection par laser, la physique atomique, l'analyse chimique ou encore la fluorométrie, l'holographie marine. Parmi les sources disponibles dans le commerce dans cette gamme spectrale, on connait par exemple les lasers à colorant, les lasers à Argon, les lasers à Hélium Néon, qui sont dans la pratique, volumineux ou difficiles à utiliser, ou encore les diodes laser qui dans cette gamme de longueurs d'onde délivrent peu de puissance.

Afin d'obtenir des sources compactes et puissantes dans cette gamme de longueurs d'onde, il est également connu d'utiliser des diodes laser présentant une forte puissance dans l'infrarouge, couplées à des cristaux non linéaires pour le doublage ou le triplage de fréquence par exemple. Un exemple est donné dans l'article de P. Polynkin et al., « Laser Transmitter Undersea Communications using Third Harmonie Génération of Fiber- Laser System at 1,58µm » IEEE Photonics Technology Letters, Vol.19 No.17 September 2007*.* Cet article présente une source laser dans le visible basée sur l'utilisation d'une source à 1,5µm couplée à deux cristaux en série, un premier cristal doubleur de fréquence et un second cristal sommateur de fréquence. Il est également connu d'utiliser plusieurs sources laser de longueurs d'ondes différentes, comme décrit dans le document US6665320.

Pour certaines applications, notamment dans le domaine du biomédical, de la télé détection par laser, de la spectroscopie, ou en physique atomique, par exemple pour les applications de refroidissement atomique, on recherche des sources accordables dans le visible, c'est-à-dire des sources dont on peut modifier la longueur d'onde d'émission sur une plage de fréquence donnée.

La variation de la longueur d'onde d'émission (autrement dit de la fréquence) d'une source laser est généralement obtenue autour de la fréquence centrale d'émission en modifiant un ou plusieurs paramètres internes qui gouvernent la fréquence d'émission laser. Ces paramètres peuvent être, dans le cas d'une diode laser, la température ou le courant d'injection qui lui est appliqué.

Cependant, la gamme de longueurs d'onde accessible en faisant varier les paramètres internes d'une diode laser est d'environ 0.15 nm pour une longueur d'onde centrale de 1.5 µm. Il faudrait donc plus de 30 diodes laser pour recouvrir une plage d'accordabilité de 5 nm par exemple, ce qui correspond typiquement à l'acceptance spectrale des cristaux non linéaires. Le système serait alors complexe et finalement peu compact.

La variation en longueur d'onde d'émission peut être également obtenue par l'utilisation d'une cavité externe également nommée cavité étendue. Dans cette configuration, l'une des faces de la diode laser est traitée antireflet. La lumière émise à travers la face antireflet est couplée à nouveau dans la diode au moyen d'un réflecteur externe qui forme un premier miroir de la cavité laser, l'autre miroir de la cavité étant formée par la face (non traitée antireflet) de la diode laser opposée à la face traitée antireflet. La lumière non réfléchie par la face non traitée antireflet est émise à l'extérieur de la cavité et forme le faisceau laser utile. Pour obtenir une émission accordable en longueur d'onde avec un tel dispositif, le réflecteur externe utilisé est sélectif en longueur d'onde, la sélectivité variant par exemple en fonction de l'angle d'incidence sur le réflecteur externe. De tels systèmes, disponibles dans le commerce, permettent d'obtenir une émission continûment accordable sur une bande spectrale de plus de 100 nm. Néanmoins, de telles performances requièrent des ajustements très précis lors de l'assemblage et une très bonne stabilité mécanique du dispositif.

La présente invention propose une source laser compacte et accordable, peu sensible à l'environnement ou aux conditions d'utilisation, et permettant l'émission de faisceaux de forte puissance optique (typiquement plusieurs centaines de mW), y compris dans le visible.

### RESUME

Selon un premier aspect, la présente description concerne une source laser accordable en fréquence comprenant :
- un ensemble de N sources élémentaires, N ≥ 2, chaque source élémentaire étant adaptée à l'émission d'un faisceau à une fréquence centrale donnée avec une largeur spectrale donnée;
- un coupleur optique permettant de coupler les faisceaux émis par chacune des sources élémentaires pour former un faisceau incident multi-spectral regroupant dans un même faisceau optique l'ensemble des fréquences des N sources élémentaires ;
- un séparateur de faisceau permettant de former à partir du faisceau incident un premier faisceau et un second faisceau regroupant chacun l'ensemble des fréquences d'émission des sources élémentaires;
- un premier filtre accordable permettant de sélectionner à partir du premier faisceau un troisième faisceau à une première fréquence;
- un deuxième filtre accordable permettant de sélectionner à partir du deuxième faisceau un quatrième faisceau à une deuxième fréquence;
- un cristal non linéaire doubleur de fréquence permettant de générer à partir du troisième faisceau à la première fréquence un cinquième faisceau présentant une fréquence double de la première fréquence ;
- un cristal non linéaire générateur de somme de fréquences permettant à partir du cinquième faisceau issu du cristal non linaire doubleur de fréquence et du quatrième faisceau à la deuxième fréquence, de générer un faisceau ayant une fréquence égale à la somme du double de la première fréquence et de la deuxième fréquence.

Une telle source accordable a l'avantage de permettre l'accès à une large gamme spectrale à partir d'un nombre limité de sources élémentaires. Grâce au nombre limité de sources élémentaires, la source obtenue est compacte et peu encombrante.

Selon un ou plusieurs exemples de réalisation, les sources élémentaires peuvent être des diodes laser, des lasers solides ou des lasers à fibres. En particulier, les diodes lasers sont peu encombrantes et économiques. Les lasers à fibres sont puissants et ont une gamme d'accordabilité plus importante.

Selon un ou plusieurs exemples de réalisation, chacune des sources élémentaires présente une bande spectrale d'accordabilité. L'accordabilité de chacune des sources élémentaires permet de faire varier les fréquences d'émission centrales des sources élémentaires et d'augmenter ainsi l'accordabilité de la source dans son ensemble.

Selon un ou plusieurs exemples de réalisation, les écarts entre les fréquences centrales de deux sources élémentaires de fréquences centrales adjacentes sont supérieurs à la bande spectrale d'accordabilité de chacune desdites sources élémentaires. Cette configuration permet d'élargir la gamme spectrale d'accordabilité de la source laser.

Selon un ou plusieurs exemples de réalisation, les écarts entre les fréquences centrales de deux sources élémentaires de fréquences centrales adjacentes sont supérieurs à la largeur spectrale de chacune desdites sources élémentaires ; là encore, la gamme spectrale d'accordabilité de la source laser se trouve élargie. Selon un ou plusieurs exemples de réalisation, la source laser accordable en longueur d'onde comprend un amplificateur permettant d'amplifier le faisceau incident multi-spectral.

Selon un ou plusieurs exemples de réalisation, la source laser accordable en longueur d'onde est tout ou partiellement fibré. Ainsi le source est peu sensible au dérèglement optique et peut être facilement déplacée ou utilisée dans des systèmes embarqués.

Selon un ou plusieurs exemples, la source laser accordable en longueur d'onde comprend au moins un module de contrôle adapté pour l'optimisation du couplage dans l'un au moins des cristaux non linéaires doubleur de fréquence et générateur de somme de fréquences. Ainsi l'émission de la source accordable est optimisée en fonction des besoins en aval de la source laser accordable.

Selon un ou plusieurs exemples, la source laser accordable en longueur d'onde comprend un système d'asservissement en température des cristaux non linéaires. Ce système permet d'assurer l'optimisation de la puissance et du fonctionnement des cristaux en ajustant leur bande passante avec la sélectivité des filtres optiques.

Selon un deuxième aspect, la présente description concerne un procédé d'émission d'un faisceau laser accordable comprenant :
- la génération à partir de faisceaux émis par un ensemble de sources élémentaires, d'un faisceau incident multi-spectral regroupant l'ensemble des fréquences d'émission desdites sources élémentaires;
- la séparation du faisceau incident en un premier faisceau et un second faisceau comprenant chacun l'ensemble des fréquences d'émission desdites sources élémentaires;
- la sélection à partir du premier faisceau et au moyen d'un premier filtre accordable d'un troisième faisceau à une première fréquence;
- la sélection à partir du second faisceau et au moyen d'un deuxième filtre accordable d'un quatrième faisceau à une deuxième fréquence;
- la génération au moyen d'un cristal non linéaire doubleur de fréquence et à partir du troisième faisceau à la première fréquence, d'un cinquième faisceau ayant une fréquence double de la première fréquence;
- la génération au moyen d'un cristal non linéaire générateur de somme de fréquences et à partir du cinquième faisceau issu du cristal non linaire doubleur de fréquence et du quatrième faisceau à la deuxième fréquence, d'un faisceau une fréquence égale à la somme du double de la première fréquence et de la deuxième fréquence.

Selon un ou plusieurs exemples de réalisations, l'émission laser est continue.

### BREVE DESCRIPTION DES DESSINS

D'autres avantages et caractéristiques de l'objet de la description apparaîtront à la lecture de la description, illustrée par les figures suivantes :
Figures 1A et 1B, des schémas illustrant une source laser accordable en fréquence selon un exemple de la présente description et un exemple de dispositif pour la génération d'un faisceau incident multi-spectral;
Figure 2, un tableau présentant des fréquences accessibles au moyen d'un procédé d'émission selon un exemple de la présente description;
Figures 3A et 3B, des schémas représentant des spectres théoriques des fréquences accessibles au moyen d'un procédé d'émission selon deux exemples de la présente description.

### DESCRIPTION DETAILLEE

Sur les figures, les éléments identiques sont repérés par les mêmes références.

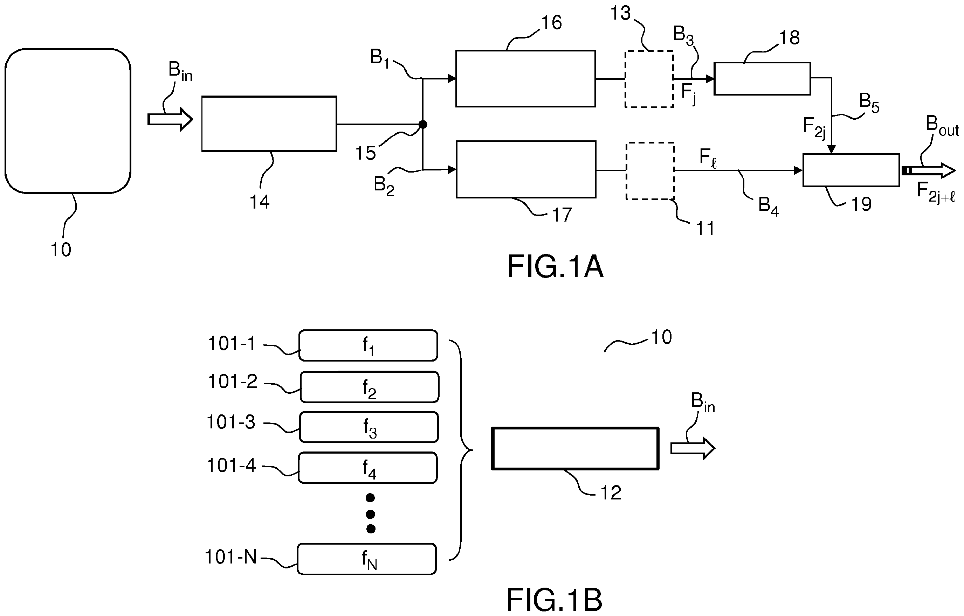

Les figures 1A et 1B illustrent respectivement une source laser accordable en fréquence selon un exemple la présente description et un dispositif pour l'émission d'un faisceau incident multi-spectral à partir d'un ensemble de sources élémentaires.

La source laser accordable en longueur d'onde représentée sur la figure 1A comprend un dispositif 10 pour l'émission d'un faisceau laser incident multi-spectral, un amplificateur optique 14, un séparateur de faisceau 15, un premier filtre optique accordable 16, un deuxième filtre optique accordable 17, un cristal doubleur de fréquence 18 ou SHG (pour « Second Harmonie Generation ») et un cristal générateur de somme de fréquences 19 ou SFG (pour « Sum-Frequency Generation »).

Un exemple de dispositif 10 pour l'émission d'un faisceau laser incident multi-spectral Bᵢₙ est représenté sur la figure 1B. Il comprend un ensemble de N sources élémentaires 101-1, 101-2, ..., 101-N, où N ≥ 2, chaque source élémentaire 101-k étant adaptée à l'émission d'un faisceau laser à une fréquence centrale donnée fₖ avec une largeur spectrale donnée et un écart Δfₖ entre les fréquences fₖ et fₖ₊₁ centrales de deux sources élémentaires de fréquences adjacentes. Le dispositif 10 comprend également un coupleur optique 12 permettant, à partir des faisceaux laser émis par l'ensemble des sources élémentaires, de former un faisceau incident Bᵢₙ unique dont le spectre est formé de l'union des spectres des sources élémentaires. Il s'agit par exemple d'un multiplexeur à longueurs d'onde, tel que celui vendu par la société Optospan©. Un tel coupleur optique 12 peut présenter l'avantage de maintenir la polarisation.

Selon une variante, chaque source élémentaire 101-k peut être accordable sur une plage de fréquence donnée δfₖ.

Les sources élémentaires sont selon une variante, des lasers à fibre tels qu'un laser à fibre Erbium, des lasers solides tels qu'un laser à Nd : YAG ou un laser à ND : GAGG ou des diodes laser. Les sources peuvent présenter une émission continue ou impulsionnelle, par exemple dans l'une des bandes autour de 1, 5µm ou autour de 1µm. Les lasers à fibre présentent généralement une accordabilité plus importante que celle d'une diode laser, ce qui peut permettre de faire varier les fréquences d'émission centrales des sources élémentaires et augmenter encore l'accordabilité de la source dans son ensemble.; par exemple le laser à fibre Erbium a une accordabilité en longueur d'onde d'environ 1000 pm en variant la température du laser de 30°C, tandis que l'accordabilité d'une diode laser est d'environ 5 à 10 fois plus faible, par exemple de 150 pm en faisant varier la température de la diode de 10°C. En revanche, les diodes laser présentent l'avantage de la compacité. En effet, une diode laser a un volume de l'ordre de quelques cm³ et pèse moins de 100 g alors qu'un laser à fibre a une largeur d'environ 50 cm et pèse autour des 7 kg. L'amplificateur optique 14, par exemple un amplificateur à fibre dopé Erbium pour une bande autour de 1.5µm ou un amplificateur à fibre Ytterbium pour une bande autour de 1µm, permet l'amplification du faisceau incident multi-spectral Bᵢₙ afin de fournir la puissance optique nécessaire. L'amplificateur optique présente l'avantage d'avoir une large acceptance spectrale; un seul composant peut donc être utilisé pour l'amplification du faisceau incident multi-spectral ; le même composant peut également être utilisé lorsqu'on modifie les sources élémentaires pour couvrir une autre bande spectrale que celles mentionnées précédemment . L'amplificateur optique 14 peut présenter l'avantage de maintenir la polarisation.

Il est également possible de s'affranchir d'un amplificateur optique si la puissance optique du faisceau incident multi-spectral est suffisante pour générer un mécanisme non linéaire dans les cristaux, typiquement autour de 0.5 Watt.

Lorsque le dispositif de la présente description fonctionne en espace libre, il est possible d'utiliser un faisceau incident multi spectral ayant une puissance optique plus importante que lorsque le dispositif fonctionne en régime fibré comme décrit plus bas. En effet les connections entre fibres et cristaux non linéaires actuellement dans le commerce sont moins résistantes aux puissances optiques élevées.

Un exemple de procédé d'émission laser accordable est décrit au moyen de la figure 1A.

Le faisceau incident multi-spectral Bᵢₙ, après amplification si nécessaire au moyen de l'amplificateur 14, est séparé en deux faisceaux par le séparateur de faisceau 15, un premier faisceau B₁ et un second faisceau B₂. Le ratio des puissances optiques sur chacune des voies peut être optimisé en fonction des puissances requises en aval dans la source laser accordable 1. Chacun des premier et second faisceaux optiques regroupe comme le faisceau incident multi-spectral Bᵢₙ l'ensemble des fréquences d'émission des sources élémentaires.

Le premier faisceau B₁ est envoyé sur un premier filtre optique accordable 16 pour former un troisième faisceau optique B₃ à une première fréquence Fⱼ sélectionnée parmi les fréquences du spectre du faisceau incident multi-spectral. Le deuxième faisceau B₂ est envoyé sur un deuxième filtre optique accordable 17 pour former un quatrième faisceau optique B₄ à une deuxième fréquence F_{ℓ} également sélectionnée parmi les fréquences du spectre du faisceau incident multi-spectral. Les deux filtres optiques accordables fonctionnent simultanément mais indépendamment l'un de l'autre, de telle sorte que les première et deuxième fréquences Fⱼ et F_{ℓ} des troisième et quatrième faisceaux puissent être choisies de façon totalement indépendante. Les première et deuxième fréquences Fⱼ et F_{ℓ} des troisième et quatrième faisceaux peuvent être égales à l'une et l'autre des fréquences centrales de deux des sources laser élémentaires, de telle sorte à bénéficier d'une meilleure puissance optique.

Les filtres optiques accordables 16 et 17 peuvent être par exemple des cavités Fabry Pérot, des réseaux optiques accordables en longueur d'onde de façon continue, ou des filtres optiques à maintien de polarisation accordables en continu, tels que ceux vendus par IDIL Products©, ces filtres pouvant filtrer une longueur d'onde autour de 1550 nm avec une résolution de 0,1 nm dans une gamme spectrale de 40 nm ; les filtres optiques accordables 16, 17 peuvent être également des filtres optiques accordables à application multiple tels que ceux vendus par JDSU©, ces filtres pouvant filtrer des longueurs d'ondes entre 1520 et 1630 nm avec une résolution de 0.2 nm. Les filtres optiques peuvent présenter l'avantage de maintenir la polarisation.

Le troisième faisceau B₃ à la première fréquence Fⱼ est couplé dans le cristal non linéaire doubleur de fréquence 18 pour générer un faisceau B₅ ayant une fréquence F₂ⱼ double de Fⱼ. Il est ainsi possible en jouant sur le premier filtre optique accordable 16 agencé en amont, de générer successivement les harmoniques 2*Fⱼ de chacune des fréquences Fⱼ possibles du faisceau incident, et ce dans la bande passante permise par le cristal non linéaire doubleur de fréquence. Ainsi par exemple, 2*Fⱼ peut prendre les valeurs 2*f₁, 2*f_{2...}2*f_{N}, où f₁, f₂,..., f_{N} sont les fréquences d'émission centrales des sources élémentaires. Selon une variante, un filtre optique approprié (non représenté sur la figure 1A) est agencé en sortie du cristal doubleur 18 afin de couper la radiation résiduelle à la fréquence Fⱼ.

Le quatrième faisceau B₄ à la seconde fréquence F_{ℓ}, qui n'a pas traversé le premier cristal non linéaire 18, est couplé avec le faisceau B₅ à la fréquence F₂ⱼ = 2* Fⱼ dans le cristal non linéaire générateur de somme de fréquences 19 pour réaliser la somme de fréquences F₂ⱼ et F_{ℓ}, résultant en un faisceau de sortie Bₒᵤₜ dont la fréquence F_{2j+ℓ} est égale à F₂ⱼ + F_{ℓ}. De la même manière que précédemment, et indépendamment du réglage du premier filtre optique accordable, il est possible en réglant le second filtre optique accordable 17 agencé en amont, et ce dans la bande passante permise par le cristal non linéaire générateur de somme de fréquences, de générer successivement un ensemble d'harmoniques (2*Fⱼ+F_{ℓ}) nommées F_{2j+ℓ} pour chacune des fréquences Fₖ possibles du faisceau incident Bᵢ. Par exemple, f_{2j+ℓ} peut prendre les valeurs 2*fⱼ+f₁, 2*fⱼ+f₂, ..., 2*fⱼ+fₖ,... 2*f₁+f_{N}. Les faisceaux résiduels issus du deuxième cristal non linéaire 18 et ayant respectivement une fréquence 2*Fⱼ et F_{ℓ} peuvent être utilisés ou filtrés.

Les cristaux 18, 19 pour le doublage et la génération de somme de fréquences sont par exemple des cristaux en niobate de lithium (LiNbO3). D'autres cristaux peuvent être utilisés de façon connue, comme par exemple le Phosphate de Potassium Titanyl, utilisé en structure polarisé périodiquement (ou PPKTP), ou le BBO (bêta-borate de baryum) ou encore le LBO (Lithium triborate) si le procédé d'émission est appliqué dans l'UV.

Selon une variante, la source laser accordable peut comprendre un module de contrôle 11 et/ou 13 (représenté en pointillés sur la figure 1A) permettant d'optimiser le couplage respectivement dans l'un au moins des cristaux non linéaires 19, 18. Ainsi le module de contrôle 11 permet de contrôler des paramètres du quatrième faisceau B₄ en vue de l'optimisation du couplage dans le cristal non linéaire générateur de somme de fréquences 19 et en fonction des caractéristiques requises en aval de la source laser accordable. Ces paramètres peuvent être des paramètres géométriques, de polarisation et/ou de puissance. Le module de contrôle 13 peut être installé pour contrôler les paramètres du troisième faisceau B₃ afin d'optimiser l'efficacité de doublage via le cristal 18. La source laser accordable peut aussi comprendre deux modules de contrôle pour contrôler les paramètres du quatrième faisceau B₄ et du troisième faisceau B₃. Le module de contrôle peut présenter l'avantage de maintenir la polarisation.

La puissance en sortie de la source laser accordable peut être également optimisée en ajustant la sélection des filtres optiques afin qu'ils transmettent le maximum de puissance optique en sortie du premier filtre accordable 16 à la fréquence Fj et le maximum de puissance optique en sortie du deuxième filtre accordable 17 à la fréquence F_{ℓ}. Un asservissement en température de l'un et/ou l'autre des cristaux non linéaires peut être aussi effectué afin d'optimiser l'efficacité de conversion non linéaire pour les processus « Second Harmonie Génération » et « Sum-Frequency Génération » et assurer ainsi l'optimisation de la puissance et du fonctionnement des cristaux non linéaires.

La source laser accordable en fréquence ainsi décrite permet de générer notamment *N²* faisceaux optiques oscillant à des fréquences (2*fⱼ+f_{ℓ}) en combinant les N fréquences centrales distinctes *f*ₖ (N supérieur ou égal à 2) contenues dans le faisceau incident multi-spectral. Les fréquences centrales étant par exemple dans une gamme spectrale comprise dans la bande C ou dans la bande L, il en résulte la génération de fréquences dans le visible (entre 480 nm et 540 nm), une partie de ces fréquences ne pouvant être obtenues par un processus de triplement de fréquence habituel, c'est-à-dire en substituant simplement les sources lasers en amont de cristaux non linéaires sans séparation ni filtres optiques accordables.

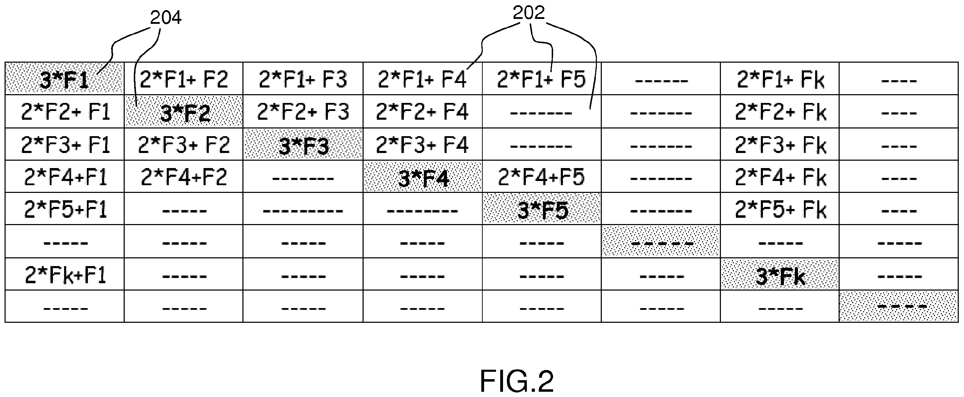

Le tableau de la figure 2 illustre une matrice des *N*² fréquences qu'il est possible de générer à l'aide de *N* sources élémentaires en sélectionnant au moyen des deux filtres optiques accordables les *N* fréquences centrales d'émission contenues dans le faisceau incident multi-spectral. Parmi ces *N*² fréquences, il y a les éléments diagonaux 204 (éléments sur fond pointillé) et non diagonaux 202 (éléments sur fond blanc). Les éléments diagonaux 204 de ce tableau correspondent aux fréquences 3*fₖ, c'est-à-dire quand les filtres optiques accordables sont ajustés pour avoir fⱼ = f_{ℓ}. Les éléments non diagonaux 202 correspondent aux nouvelles fréquences (2*fⱼ+ f_{ℓ}) pour fⱼ différent de f_{ℓ} ; ces fréquences ne peuvent pas être obtenues par un processus de triplement de fréquences selon l'art antérieur.

La plage d'accordabilité en fréquence de la source laser accordable ainsi obtenue dépend d'un certain nombre de paramètres dont le nombre de sources élémentaires utilisées, la fréquence centrale (ou longueur d'onde centrale) d'émission de chaque source élémentaire 101-1 à 101-N, l'accordabilité intrinsèque δfₖ de chacune des sources élémentaires, et l'écart Δfₖ entre les fréquences centrales des sources élémentaires. Ainsi, pour un même nombre de sources élémentaires, en choisissant des sources élémentaires avec des fréquences centrales plus ou moins rapprochées, on pourra favoriser un spectre d'accordabilité avec une meilleure continuité entre les fréquences mais une plage de fréquences moins grande, ou l'inverse. La plage d'accordabilité est également limitée par la bande passante des deux cristaux non linéaires utilisés. Par contre, les bandes passantes des filtres optiques accordables, de l'amplificateur et du coupleur optique ne sont en général pas des facteurs limitant car elles sont bien supérieures à celles des cristaux non linéaires.

En pratique, on peut par exemple souhaiter produire un faisceau ayant une fréquence visible Fᵤ dans le visible ou l'UV via un cristal non linéaire ; cependant la source laser présentant une fréquence centrale fₚ = 1/3*Fᵤ permettant d'accéder à Fᵤ par un processus non linéaire de type connu n'existe pas. En application du procédé selon la présente description, on pourra choisir un ensemble de sources élémentaires comprenant au moins deux sources élémentaires dont les fréquences fⱼ et f_{ℓ} sont telles que la fréquence Fᵤ est égale à (2*fⱼ+ f_{ℓ}).

Si l'on cherche en plus à produire de façon alternative (successive ou aléatoire) un ensemble de fréquences Fᵤ, il sera possible en utilisant le dispositif et le procédé de la présente description, de modifier la fréquence Fᵤ du faisceau issue de la source accordable sans changer les sources élémentaires dans le dispositif expérimental mais par simple ajustement des paramètres d'opération des filtres 16 et 17 ainsi que ceux des cristaux 18 et 19.

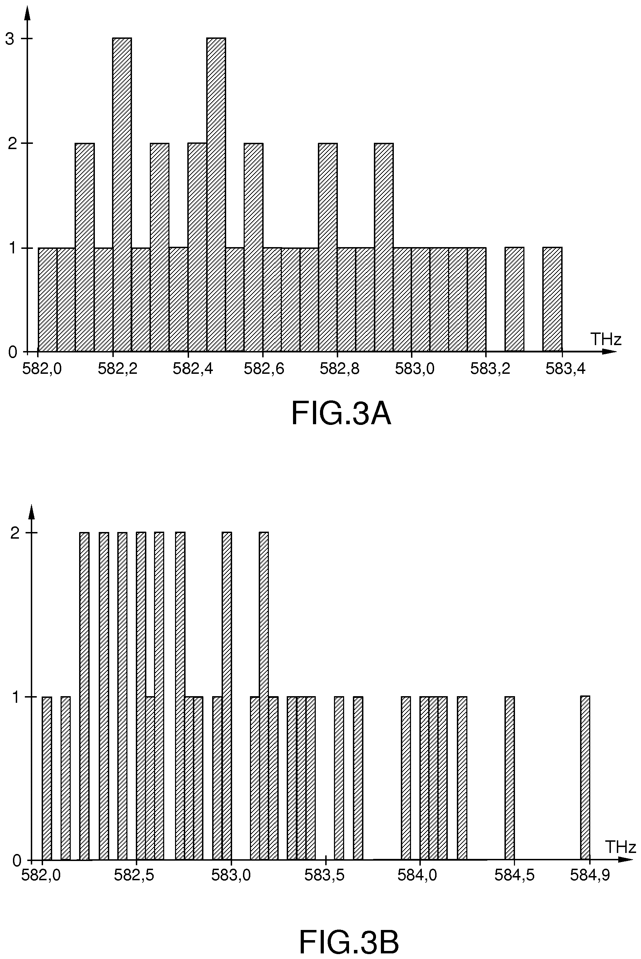

Selon les écarts Δfₖ choisis entre les fréquences centrales des sources élémentaires, il est possible de privilégier, pour un même nombre de sources élémentaires, soit l'accès à un spectre continu de fréquences harmoniques ou quasi continu sur une plage de fréquences données, soit l'accès à un spectre de fréquences discrètes étalées sur une plus grande plage de fréquences. L'écart entre les fréquences centrales et le nombre de sources laser élémentaires sont déterminés en aval par le besoin de l'utilisateur. L'écart entre deux fréquences centrales *f*ₖ et *f*ₖ₊₁ qui se suivent peut être identique pour tous les couples de sources élémentaires ou au contraire, variable. Les figures 3A et 3B illustrent ainsi deux spectres théoriques obtenus au moyen d'une source accordable selon un exemple. L'axe des abscisses représente la fréquence en THz et l'axe des ordonnées représente le nombre de combinaisons possibles pour obtenir une fréquence donnée égale à 2*fⱼ + f_{ℓ} en faisant varier j de 1 à N et ℓ de 1 à N, au moyen du dispositif représenté par exemple sur la figure 1A. Dans l'exemple des figures 3A et 3B, N = 6 de telle sorte qu'il est possible d'obtenir en sortie de la source laser accordable 36 fréquences à partir des fréquences centrales des sources laser comprises dans le faisceau incident multi-spectral.

Ainsi, par exemple, la figure 3A illustre les 36 combinaisons possibles pour obtenir 26 fréquences différentes dans le visible à partir de 6 sources élémentaires selon le dispositif et le procédé de la présente description. Dans cet exemple, la fréquence la plus basse des 6 sources élémentaires utilisées dans l'IR est environ de 194,000 THz, la plus haute est environ de 194,460 THz environ, soit un étalement de 0,46 THz dans l'IR. Les fréquences centrales et les écarts en fréquence entre-elles sont choisis de façon à produire un spectre visible quasi-continu entre 582 THz et 583.4 THz, soit un étalement de 1,4 THz. Sur la figure 3A on remarquera qu'il est possible de produire certaines fréquences visibles avec plusieurs combinaisons de type 2*fj + fℓ. Par exemple, la fréquence 582,2 THz peut être obtenue avec trois combinaisons différentes.

La figure 3B illustre un second exemple de spectre généré selon le dispositif et le procédé de la présente description, en utilisant 6 sources élémentaires infrarouges distinctes, comme dans le cas de la figure 3A. Comme dans le cas précédent la fréquence la plus basse utilisée dans l'IR est 194,000 THz. La fréquence la plus haute est cette fois ci égale à 195,000 THz, soit un écart maximum de 1,000 THz dans l'infrarouge. Les 4 autres radiations fondamentales impliquées dans cet exemple, comprises entre les deux valeurs extrêmes ci-dessus, sont choisies de façon à obtenir le maximum de radiations distinctes dans la partie verte du spectre optique, c'est-à-dire entre 582,000 THz et 585,000 THz. Sur la figure 3B on remarquera qu'il est possible également de synthétiser certaines fréquences visibles avec plusieurs combinaisons de type 2*fj + fl.

Selon le besoin en termes de fréquences à synthétiser, il est possible d'augmenter/réduire le nombre de sources élémentaires de départ avant amplification, la fréquence centrale de chaque source élémentaire ou l'espacement entre les fréquences respectives des sources.

Ainsi, le faisceau de sortie Bₒᵤₜ en sortie de la source accordable peut présenter une fréquence dans le vert à partir d'un faisceau multi-spectral incident ayant des fréquences dans l'infrarouge ; le faisceau de sortie Bₒᵤₜ en sortie de la source accordable peut également présenter une fréquence dans l'ultraviolet à d'un partir d'un faisceau incident ayant des fréquences comprises par exemple entre 1200 nm et 1300 nm.

A titre d'illustration, si l'on prend l'exemple d'une source laser accordable selon la présente description dans laquelle deux sources laser élémentaires sont utilisées, par exemple des diodes laser, dont les fréquences centrales sont 1.495 µm et 1.497µm. Dans ce cas, la fréquence du cinquième faisceau B₅ en sortie du cristal doubleur de fréquence correspondra à la deuxième harmonique du faisceau incident, c'est à dire à une émission dans le rouge. Ainsi les fréquences du faisceau de sortie Bₒᵤₜ accessibles se situent dans le vert/bleu, et peuvent prendre 4 valeurs, à savoir 498.33 nm, 498.55 nm, 498.77 nm et 499 nm si on se limite avec les filtres optiques accordables aux fréquences centrales des sources élémentaires contenues dans le faisceau incident multi-spectral. Par ailleurs, les faisceaux résiduels en sortie du cristal générateur de somme de fréquences sont dans l'infrarouge et dans le rouge.

Si l'on prend l'exemple maintenant d'une source laser accordable selon la présente description dans laquelle deux sources laser élémentaires sont utilisées, par exemple des diodes laser, dont les fréquences centrales sont 1.03 µm et 1.04µm. Dans ce cas, la fréquence du cinquième faisceau B₅ en sortie du cristal doubleur de fréquence correspondra à la deuxième harmonique du faisceau incident, c'est à dire à une émission dans le vert. Ainsi les fréquences du faisceau de sortie Bₒᵤₜ accessibles se situent dans le violet, et peuvent prendre 4 valeurs, à savoir 343.33 nm, 344.44 nm, 345,55 nm et 346,66 nm si on se limite avec les filtres optiques accordables aux fréquences centrales des sources élémentaires contenues dans le faisceau incident multi-spectral. Par ailleurs, les faisceaux résiduels en sortie du cristal générateur de somme de fréquences sont dans l'infrarouge et dans le vert.

Selon une variante, le dispositif d'émission du faisceau laser incident multi-spectral de la source laser accordable selon la présente description peut être stabilisé en amont par des techniques connues telles que l'asservissement des fréquences sur une raie d'absorption moléculaires ou encore les techniques d'interférométriques « classiques » via des cavités Fabry Pérot. En stabilisant le dispositif d'émission laser, l'émission de la source accordable est stabilisée.

La source laser accordable selon la présente description peut fonctionner en mode de propagation en espace libre, en mode de propagation fibré ou dans un mode mixte. Le mode de propagation fibré permet une très bonne stabilité mécanique, et permet de maintenir l'alignement optique de la source laser accordable; il est rendu possible du fait que tous les composants nécessaires à la mise en oeuvre de la source accordable selon la présente description sont des éléments qui peuvent être fibrés, aussi bien les sources laser élémentaires, l'amplificateur optique, les filtres optiques, le coupleur que les cristaux non linéaires. Ainsi les dispositifs représentés sur les figures 1A et 1B peuvent fonctionner en mode fibré.

Bien que décrite à travers un certain nombre d'exemples de réalisation détaillés, le procédé et la source accordable en longueurs d'onde selon la présente description comprennent différentes variantes, modifications et perfectionnements qui apparaîtront de façon évidente à l'homme de l'art, étant entendu que ces différentes variantes, modifications et perfectionnements font partie de la portée de l'objet de la présente description, telle que définie par les revendications qui suivent.

## Revendications

1. Source laser accordable en fréquence comprenant :
- un ensemble de N sources élémentaires (101-1, 101-2,..., 101-N), N ≥ 2, chaque source élémentaire (101-k) étant adaptée à l'émission d'un faisceau à une fréquence centrale donnée (fₖ) avec une largeur spectrale donnée ;
- un coupleur optique (12) permettant de coupler les faisceaux émis par chacune des sources élémentaires (101-k) pour former un faisceau incident (Bᵢₙ) multi-spectral, regroupant dans un même faisceau optique l'ensemble des fréquences (fₖ) des N sources élémentaires ;
- un séparateur de faisceau (15) permettant de former à partir du faisceau incident (Bᵢₙ) un premier faisceau (B₁) et un second faisceau (B₂) regroupant chacun l'ensemble des fréquences d'émission des sources élémentaires;
- un premier filtre accordable (16) permettant de sélectionner à partir du premier faisceau (B₁) un troisième faisceau (B₃) à une première fréquence (Fⱼ);
- un deuxième filtre accordable (17) permettant de sélectionner à partir du deuxième faisceau (B₂) un quatrième faisceau (B₄) à une deuxième fréquence (F_{ℓ});
- un cristal non linéaire doubleur de fréquence (18) permettant de générer à partir du troisième faisceau (B₃) à la première fréquence (Fⱼ) un cinquième faisceau (B₅) présentant une fréquence (F₂ⱼ) double de la première fréquence (Fⱼ);
- un cristal non linéaire générateur de somme de fréquences (19) permettant à partir du cinquième faisceau (B₅) issu du cristal non linaire doubleur de fréquence (18) et du quatrième faisceau (B₄) à la deuxième fréquence (F_{ℓ}), de générer un faisceau (Bₒᵤₜ) ayant une fréquence (F_{2j+ℓ}) égale à la somme du double de la première fréquence (F₂ⱼ) et de la deuxième fréquence (F_{ℓ}).

2. Source laser accordable en longueur d'onde selon la revendication 1, dans laquelle les sources élémentaires (101-k) sont des diodes laser, des lasers solides ou des lasers à fibres.

3. Source laser accordable en longueur d'onde selon l'une quelconque des revendications 1 ou 2, dans laquelle l'une au moins des sources élémentaires (101-k) présente une bande spectrale d'accordabilité (δfₖ).

4. Source laser accordable en longueur d'onde selon la revendication 3, dans laquelle les sources élémentaires (101-k) présentant chacune une bande spectrale d'accordabilité (δfₖ), les écarts (Δfₖ) entre les fréquences centrales (fₖ, fₖ₊₁) de deux sources élémentaires de fréquences centrales adjacentes sont supérieurs à la bande spectrale d'accordabilité (δfₖ) de chacune desdites sources élémentaires.

5. Source laser accordable en longueur d'onde selon l'une quelconque des revendications précédentes, dans laquelle les écarts (Δfₖ) entre les fréquences centrales (fₖ, fₖ₊₁) de deux sources élémentaires de fréquences centrales adjacentes sont supérieurs à la largeur spectrale de chacune desdites sources élémentaires.

6. Source laser accordable en longueur d'onde selon l'une quelconque des revendications précédentes, comprenant en outre un amplificateur (14) permettant d'amplifier le faisceau incident (Bᵢₙ).

7. Source laser accordable en longueur d'onde selon l'une quelconque des revendications précédentes, tout ou partiellement fibrée.

8. Source laser accordable en longueur d'onde selon l'une quelconque des revendications précédentes, comprenant en outre au moins un module de contrôle (11, 13) pour optimiser le couplage dans au moins un des cristaux non linéaires doubleur de fréquence ou générateur de somme de fréquence (18, 19).

9. Source laser accordable en longueur d'onde selon l'une quelconque des revendications précédentes, comprenant en outre un système d'asservissement en température des cristaux non linéaires.

10. Procédé d'émission d'un faisceau laser accordable en fréquence comprenant :
- la génération à partir de faisceaux émis par un ensemble de sources élémentaires (101-k), d'un faisceau incident (Bᵢₙ) multi-spectral regroupant dans un même faisceau optique l'ensemble des fréquences (fₖ) des N sources élémentaires;
- la séparation du faisceau incident (Bᵢₙ) en un premier faisceau (B₁) et un second faisceau (B₂) regroupant chacun l'ensemble des fréquences d'émission desdites sources élémentaires;
- la sélection à partir du premier faisceau (B₁) et au moyen d'un premier filtre accordable (16) d'un troisième faisceau (B₄) à une première fréquence (fⱼ);
- la sélection à partir du second faisceau (B₂) et au moyen d'un deuxième filtre accordable (17) d'un quatrième faisceau (B₄) à une deuxième fréquence (f_{ℓ});
- la génération au moyen d'un cristal non linéaire doubleur de fréquence (18) et à partir du troisième faisceau (B₄) à la première fréquence (fⱼ), d'un cinquième faisceau (B₅) ayant une fréquence (f₂ⱼ) double de la première fréquence (fⱼ);
- la génération au moyen d'un cristal non linéaire générateur de somme de fréquences (19) et à partir du cinquième faisceau (B₅) issu du cristal non linaire doubleur de fréquence (18) et du quatrième faisceau (B₄) à la deuxième fréquence (f_{ℓ}), d'un faisceau (Bₒᵤₜ) ayant une fréquence (f_{2j+ℓ}) égale à la somme du double de la première fréquence et de la deuxième fréquence.

11. Procédé d'émission d'un faisceau laser accordable selon la revendication 10 comprenant l'amplification du faisceau incident multi-spectral (Bᵢₙ).

12. Procédé d'émission d'une source laser accordable selon l'une quelconque des revendications 10 ou 11, dans lequel l'émission des faisceaux issus des sources élémentaires est continue.

## Patentansprüche

1. Frequenzabstimmbare Laserquelle, Folgendes beinhaltend:
- eine Gruppe von N Elementarquellen (101-1, 101-2,..., 101-N), wobei N ≥ 2, wobei jede Elementarquelle (101-k) zum Aussenden eines Strahls mit einer gegebenen Mittelfrequenz (fₖ) mit einer gegebenen Spektralbreite geeignet ist;
- einen Optokoppler (12), welcher es ermöglicht, die von einer jeden der Elementarquellen (101-k) ausgesendeten Strahlen zu koppeln, um einen multispektralen, einfallenden Strahl (Bᵢₙ) zu bilden, welcher in einem gleichen optischen Strahl sämtliche Frequenzen (fₖ) der N Elementarquellen bündelt;
- einen Strahlteiler (15), welcher es ermöglicht, anhand des einfallenden Strahls (Bᵢₙ) einen ersten Strahl (B₁) und einen zweiten Strahl (B₂) zu bilden, welche jeweils sämtliche Aussendefrequenzen der Elementarquellen bündeln;
- einen ersten abstimmbaren Filter (16), welcher es ermöglicht, anhand des ersten Strahls (B₁) einen dritten Strahl (B₃) mit einer ersten Frequenz (Fⱼ) auszuwählen;
- einen zweiten abstimmbaren Filter (17), welcher es ermöglicht, anhand des zweiten Strahls (B₂) einen vierten Strahl (B₄) mit einer zweiten Frequenz (F_{ℓ}) auszuwählen;
- ein nichtlineares Frequenzverdopplungskristall (18), welches es ermöglicht, anhand des dritten Stahls (B₃) mit der ersten Frequenz (Fⱼ) einen fünften Strahl (B₅) zu erzeugen, welcher eine Frequenz (F₂ⱼ) aufweist, welche das Doppelte der ersten Frequenz (Fⱼ) beträgt;
- ein nichtlineares Frequenzsummenerzeugungskristall (19), welches es ermöglicht, anhand des fünften Strahls (B₅), welcher dem nichtlinearen Frequenzverdopplungskristall (18) entstammt und des vierten Strahls (B₄) mit der zweiten Frequenz (F_{ℓ}) einen Strahl (Bₒᵤₜ) zu erzeugen, welcher eine Frequenz (F_{2j+ℓ}) aufweist, welche der Summe des Doppelten der ersten Frequenz (F₂ⱼ) und der zweiten Frequenz (F_{ℓ}) entspricht.

2. Wellenlängenabstimmbare Laserquelle nach Anspruch 1, bei welcher die Elementarquellen (101-k) Laserdioden, Festkörperlaser oder Faserlaser sind.

3. Wellenlängenabstimmbare Laserquelle nach einem der Ansprüche 1 oder 2, bei welchem mindestens eine der Elementarquellen (101-k) ein spektrales Abstimmbarkeitsband (δfₖ) aufweist.

4. Wellenlängenabstimmbare Laserquelle nach Anspruch 3, bei welcher, da die Elementarquellen (101-k), jeweils ein spektrales Abstimmbarkeitsband (δfₖ) aufweisen, die Abweichungen (Δfₖ) zwischen den Mittelfrequenzen (fₖ, fₖ₊₁) zweier Elementarquellen mit benachbarten Mittelfrequenzen höher sind als das spektrale Abstimmbarkeitsband (δfₖ) einer jeden der Elementarquellen.

5. Wellenlängenabstimmbare Laserquelle nach einem der vorhergehenden Ansprüche, bei welcher die Abweichungen (Δfₖ) zwischen den Mittelfrequenzen (fₖ, fₖ₊₁) zweier Elementarquellen mit benachbarten Mittelfrequenzen höher sind als die spektrale Breite einer jeden der Elementarquellen.

6. Wellenlängenabstimmbare Laserquelle nach einem der vorhergehenden Ansprüche, welche zudem einen Verstärker (14) beinhaltet, welcher es ermöglicht, den einfallenden Strahl (Bᵢₙ) zu verstärken.

7. Wellenlängenabstimmbare Laserquelle nach einem der vorhergehenden Ansprüche, welche ganz oder teilweise faserig ist.

8. Wellenlängenabstimmbare Laserquelle nach einem der vorhergehenden Ansprüche, welche zudem mindestens ein Steuerungsmodul (11, 13) zum Optimieren der Kopplung in mindestens einem der beiden nichtlinearen Kristalle der Gruppe beinhaltet, bestehend aus einem Frequenzverdopplungs- oder einem Frequenzsummenerzeugungskristall (18, 19).

9. Wellenlängenabstimmbare Laserquelle nach einem der vorhergehenden Ansprüche, welche zudem ein Temperaturnachführungssystem der nichtlinearen Kristalle beinhaltet.

10. Aussendungsverfahren eines frequenzabstimmbaren Laserstrahls, welches Folgendes beinhaltet:
- Erzeugen, anhand von Strahlen, welche von einer Gruppe von Elementarquellen (101-k) ausgesendet werden, eines multispektralen, einfallenden Strahls (Bᵢₙ), welcher in einem gleichen optischen Strahl sämtliche Frequenzen (fₖ) der N Elementarquellen bündelt;
- Teilen des einfallenden Strahls (Bᵢₙ) in einen ersten Strahl (B₁) und einen zweiten Strahl (B₂), welche jeweils sämtliche Frequenzen der Elementarquellen bündeln;
- Auswählen, anhand des ersten Strahls (B₁) und mit Hilfe eines ersten abstimmbaren Filters (16), eines dritten Strahls (B₄) mit einer ersten Frequenz (fⱼ);
- Auswählen, anhand des zweiten Strahls (B₂) und mit Hilfe eines zweiten abstimmbaren Filters (17), eines vierten Strahls (B₄) mit einer zweiten Frequenz (f_{ℓ});
- Erzeugen, mit Hilfe eines nichtlinearen Frequenzverdopplerkristalls (18) und anhand des dritten Stahls (B₄) mit der ersten Frequenz (fⱼ), eines fünften Strahls (B₅), welcher eine Frequenz (f₂i) aufweist, welche das Doppelte der ersten Frequenz (fⱼ) beträgt;
- Erzeugen, mit Hilfe eines nichtlinearen Frequenzsummenerzeugungskristalls (19) und anhand des fünften Strahls (B₅), welcher dem nichtlinearen Frequenzverdopplungskristall (18) entstammt, und des vierten Strahls (B₄) mit der zweiten Frequenz (f_{ℓ}), eines Strahls (Bₒᵤₜ), welcher eine Frequenz (f_{2j+ℓ}) aufweist, welche der Summe des Doppelten der ersten Frequenz und der zweiten Frequenz entspricht.

11. Aussendungsverfahren eines abstimmbaren Laserstrahls nach Anspruch 10, welches die Verstärkung des multispektralen, einfallenden Strahls (Bᵢₙ) beinhaltet.

12. Aussendungsverfahren für eine abstimmbare Laserquelle nach einem der Ansprüche 10 oder 11, bei welchem das Aussenden der aus den Elementarquellen stammenden Strahlen kontinuierlich ist.

## Claims

1. A frequency-tunable laser source comprising:
- a set of N elementary sources (101-1, 101-2, ..., 101-N), N ≥ 2, each elementary source (101-k) being suitable for emitting a beam at a given central frequency (fₖ) having a given spectral width;
- an optical coupler (12) for coupling the beams emitted by each of the elementary sources (101-k) in order to form a multi-spectral incident beam (Bᵢₙ) regrouping all the frequencies (fₖ) of the N elementary sources in a same optical beam;
- a beam splitter (15) for forming, from the incident beam (Bᵢₙ), a first beam (B₁) and a second beam (B₂), each regrouping all the emission frequencies of the elementary sources;
- a first tunable filter (16) for selecting, from the first beam (B₁), a third beam (B₃) at a first frequency (Fⱼ);
- a second tunable filter (17) for selecting, from the second beam (B₂), a fourth beam (B₄) at a second frequency (F_{ℓ});
- a nonlinear frequency doubling crystal (18) for generating, from the third beam (B₃) at the first frequency (Fⱼ), a fifth beam (B₅) having a frequency (F₂ⱼ) which is twice the first frequency (Fⱼ);
- a nonlinear sum-frequency generation crystal (19) for generating, from the fifth beam (B₅) coming from the nonlinear frequency doubling crystal (18) and from the fourth beam (B₄) at the second frequency (F_{ℓ}), a beam (Bₒᵤₜ) having a frequency (F_{2j+ℓ}) equal to the sum of twice the first frequency (F₂ⱼ) and the second frequency (F_{ℓ}).

2. The wavelength-tunable laser source according to claim 1, in which the elementary sources (101-k) are laser diodes, solid lasers or fiber lasers.

3. The wavelength-tunable laser source according to either one of claims 1 or 2, in which at least one of the elementary sources (101-k) has a tunable spectral band (δfₖ).

4. The frequency-tunable laser source according to claim 3, in which the elementary sources (101-k) each having a tunable spectral band (δfₖ), the differences (Δfₖ) between the central frequencies (fₖ, fₖ₊₁) of two elementary sources having adjacent central frequencies are higher than the spectral tunable range (δfₖ) of each of said elementary sources.

5. The wavelength-tunable laser source according to any one of the preceding claims, wherein the differences (Δfₖ) between the central frequencies (fₖ, fₖ₊₁) of two elementary sources having adjacent central frequencies are higher than the spectral width of each of said elementary sources.

6. The wavelength-tunable laser source according to any one of the preceding claims, further comprising an amplifier (14) for amplifying the incident beam (Bᵢₙ).

7. The wavelength-tunable laser source according to any one of the preceding claims which is completely or partially fibered.

8. The wavelength-tunable laser source according to any one of the preceding claims, further comprising at least one control module (11, 13) for optimizing the coupling in at least one of the nonlinear frequency doubling or sum-frequency generation crystals (18, 19).

9. The frequency-tunable laser source according to any one of the preceding claims, further comprising a temperature control system of the nonlinear crystals.

10. A method for emitting a frequency-tunable laser beam, comprising:
- generating, from beams emitted by a set of elementary sources (101-k), a multi-spectral incident beam (Bᵢₙ) regrouping all the frequencies (fₖ) of the N elementary sources in the same optical beam;
- splitting the incident beam (Bᵢₙ) into a first beam (B₁) and a second beam (B₂), each regrouping all the emission frequencies of said elementary sources;
- selecting, from the first beam (B₁) and by means of a first tunable filter (16), a third beam (B₄) at a first frequency (fⱼ);
- selecting, from the second beam (B₂) and by means of a second tunable filter (17), a fourth beam (B₄) at a second frequency (f_{ℓ});
- generating, by means of a nonlinear frequency doubling crystal (18) and from the third beam (B₄) at the first frequency (fⱼ), a fifth beam (B₅) having a frequency (f₂ⱼ) which is twice the first frequency (fⱼ);
- generating, by means of a nonlinear sum-frequency generation crystal (19) and from the fifth beam (B₅) coming from the nonlinear frequency doubling crystal (18) and from the fourth beam (B₄) at the second frequency (f_{ℓ}), a beam (Bₒᵤₜ) having a frequency (f_{2j+ℓ}) equal to the sum of twice the first frequency and the second frequency.

11. The method for emitting a tunable laser beam according to claim 10 comprising the amplification of the multi-spectral incident beam (Bᵢₙ).

12. The method for emitting for a tunable laser source according to either one of claims 10 or 11, in which the emission of the beams coming from the elementary sources is continuous.
